# EUROPEAN PATENT SPECIFICATION

(11) **EP 1 170 085 B1**
(45) Date of publication and mention of the grant of the patent: **29.09.2004**
(21) Application number: 01116010.8
(22) Date of filing: 02.07.2001
(51) Int. Cl.: B23K 26/08, B23K 26/10, B23K 26/02

(54) **A focusing head for a laser machine**
Ein fokussierender Kopf für eine Lasermaschine
Und tête de focalisation pour une machine laser

(30) Priority: 04.07.2000 IT TO000672
(43) Date of publication of application: 09.01.2002
(73) Proprietor: PRIMA INDUSTRIE S.p.A., 10097 Collegno (Torino) (IT)
(72) Inventor: Scalzotto, Loris, 10040 Rivalta, Torino (IT)
(74) Representative: Notaro, Giancarlo

(56) References cited:
- WO-A-98/33622
- US-A- 4 578 554
- US-A- 4 695 701
- US-A- 4 855 565
- US-A- 5 059 759

## Description

The present invention relates to a focusing head for a laser machine, for example a machine for laser cutting or welding of metal pieces.

Normally, a laser focusing head comprises a base body carrying a mirror, which, in use, receives a laser beam along a first axis and deflects said beam through 90° along a second axis. A focusing lens receives the laser beam along the second axis and sends a focused laser beam through a beam-exit nozzle.

In laser cutting and welding machines it is often necessary to vary the position of the focused area of the laser beam with respect to the workpiece. At the same time, for process reasons, it is necessary to maintain the distance between the laser-beam exit nozzle and the surface of the workpiece unvaried.

In order to meet the above requirements, laser machines for plane cutting (the so-called 2D applications) have already been built which have a focusing head provided with means that can vary the distance between the focusing area of the laser beam and the beam-exit nozzle. A known solution provided by the present applicant envisages making the body of the head in two distinct sections, one of which carries the nozzle, and the other carries the mirror and the focusing lens. In this known solution, the means for adjusting the position of the focusing area of the laser beam act in such a way as to vary the distance between the aforesaid sections of the body in the exit direction of the laser beam.

WO-A-9833622 discloses an apparatus according to the preamble of claim 1 including a multi-axis manipulator which moves a piece along an interpolated motion control path to cause a stationary laser beam from a laser generator to cut windows in the piece. A beam exit casing includes a lens that converges the laser beam and a mirror that bends the beam to a ninety-degree cutting angle.

US-A-5059759 discloses a laser beam machine comprising a machining head for applying the laser beam to a workpiece mounted on a machining table and a control unit for controlling the movement of the machining table in an X-Y plane. The laser beam is kept inclined with respect to the workpiece in the machining direction, whereby, when the machining speed is increased, the sticking of dross to the workpiece is suppressed, and the machining speed can be increased accordingly.

The object of the present invention is to provide a focusing head of the type specified above which is suitable for processes carried out on three-dimensional pieces (the so-called 3D applications) and which has an improved structure, i.e., one that is simpler and more compact than in the known solution.

According to the present invention, the above purpose is achieved by a laser focusing head having the features of claim 1.

The present invention will now be described in detail with reference to the attached drawings, which are provided purely by way of non-limiting example, and in which:
- Figure 1 is a schematic and partially sectioned side view of a laser focusing head according to the present invention;
- Figure 2 is a section according to the line II-II of Figure 1;
- Figure 3 is a section similar to that of Figure 2, with the main components exploded;
- Figure 4 is an exploded cross section of the part indicated by the arrow IV in Figure 3; and
- Figures 5 and 6 are cross sections respectively illustrating a second embodiment and a third embodiment of a focusing head according to the present invention.

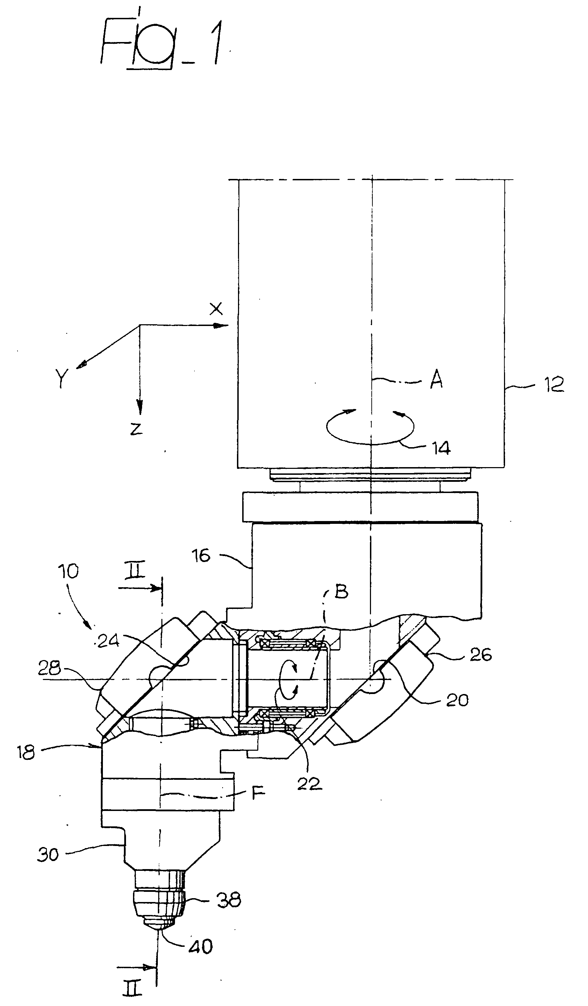

With reference to Figure 1, the number 10 designates a laser focusing head according to the present invention. The head 10 is designed to be connected, in a way in itself known, to a mobile element 12 of a laser machine. In the case where the laser machine has a cartesian-type structure, the mobile element 12 can be displaced along three mutually orthogonal directions, designated in Figure 1 by X, Y and Z. The head 10 can be connected to the mobile element 12 so that it can turn about an axis A, as indicated by the arrow 14.

The head 10 comprises a base 16 and a body 18. The base 16 carries a first mirror 20 which is designed to receive a laser beam along the axis A and to deflect it through 90° along an axis B. The body 18 is mounted in such a way that it can turn with respect to the base 16 about an axis B. Control means, in themselves known (not illustrated), are provided for controlling rotation of the body 18 about the axis B, as indicated by the double-headed arrow 22. The body 18 carries a second mirror 24 which is designed to receive a laser beam along the axis B and to deflect it by 90° along an axis F. In a known way, the mirrors 20, 24 are carried by respective supports 26, 28, which are fixed to the base 16 and to the body 18, respectively.

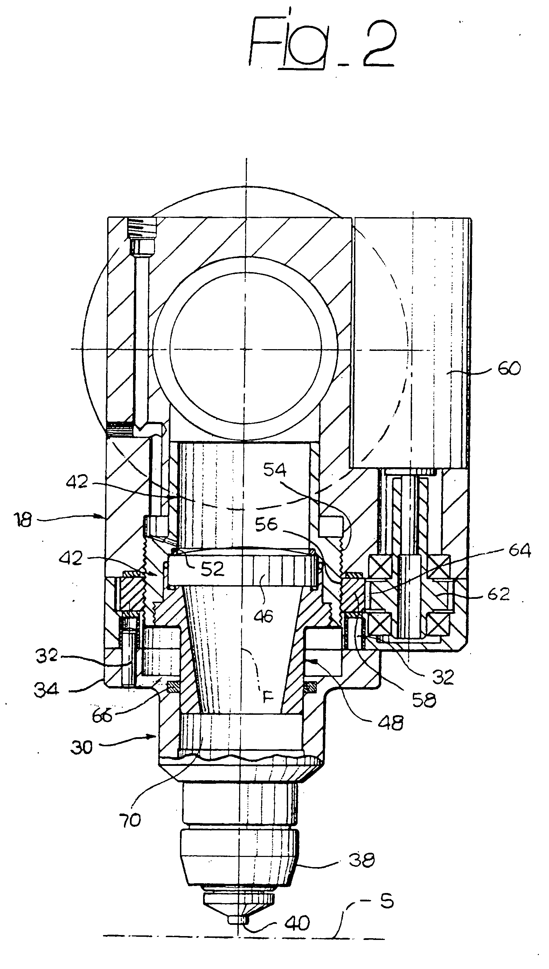

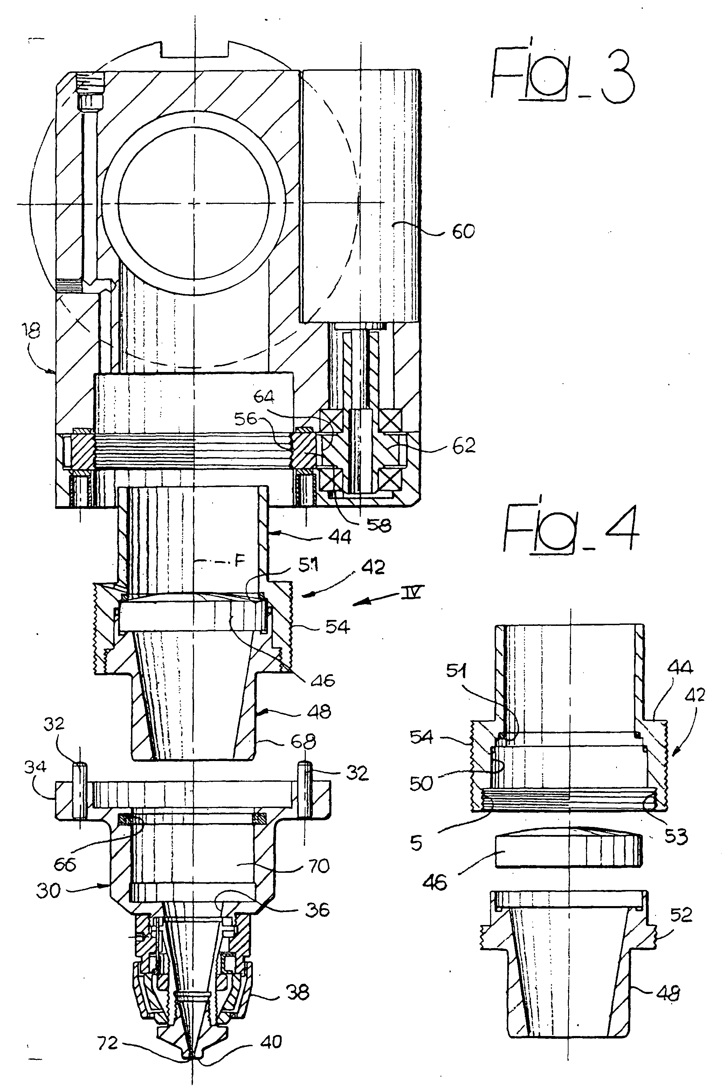

With reference to Figures 2 and 3, a nozzle 30 is fixed, in such a way that it can be removed, to the body 18. In the example illustrated in the figures, the nozzle 30 is provided with locator pins 32 which insert into corresponding holes made in the body 18. The nozzle 30 can be fixed to be body 18 by means of screws (not illustrated) which extend in a direction parallel to the axis F, extend through holes made in a flange 34 of the nozzle 30, and engage respective threaded holes provided in the body 18. The nozzle 30 has a through opening 36, in a position corresponding to which, an end element 38 is fixed that comprises a capacitive sensor which is able to detect the distance, in the direction of the beam-exit axis F, between a front surface 40 of the end element 38 and the surface S of a workpiece, indicated by a dashed line in Figure 2. A lens-holder unit 42 is mounted in the body 18 in such a way that it can move in the direction of the axis F. As illustrated in Figure 4, the lens-holder unit 42 preferably comprises a first support 44, a lens 46, and a second support 48. The first support 44 and the second support 48 are axially fixed together and withhold the lens 46 in a seat 50 provided in the first support 44. Fixing together of the two supports 44, 48 may be obtained, for example, by means of an external thread 52 of the second support 48 which engages an internal thread 53 of the first support 44. Preferably housed in the first support 44 is a seal 41 which acts on the lens 46 to create gas-tight contact with the lens 46.

With reference to Figures 3 and 4, the lens-holder unit 42 has an external thread 54, formed, for example, on the first support 44, which engages an internal thread 56 of a nut screw 58 carried by the body 18 in such a way that it can turn about the axis F. The nut screw 58 is driven in rotation by an electric motor 60 carried by the body 18. In the example illustrated in the figures, the drive mechanism between the motor 60 and the nut screw 58 comprises a pinion gear 62 which is mounted on the output shaft of the motor 60 and meshes with an external toothing 64 of the nut screw 58. It will be understood that rotation of the nut screw 58, controlled by the motor 60, brings about a movement of the lens-holder unit 42 along the axis F. This movement causes approach or recession of the lens 46 with respect to the mirror 24 and modifies the distance between the focusing area of the laser beam and the front surface 40 of the end element 38. This adjustment is useful above all for displacing the focusing area of the laser beam with respect to the workpiece, without, however, varying the distance between the front surface 40 of the end element 38 and the surface S of the piece.

Preferably, the nozzle 30 comprises a seal. 66 which establishes gas-tight contact with a tubular portion 68 of the lens-holder unit 42. During operation, in a way in itself known, into a chamber 70 of the nozzle 30 treatment gas is injected under pressure, which comes out, together with the laser beam, from an opening 72 (Figure 3) of the end element 38. The pressurized gas produces a force directed upwards on the lens 46. This force depends upon the pressure of gas supply and can reach values in the region of 2700 N. One of the advantages of the lens-holder unit according to the present invention lies in the fact that the mechanism of transmission of motion to the lens-holder unit is irreversible. Consequently, the force that acts on the lens 46 is discharged onto the body 18 without producing any displacement of the lens-holder unit 42. The lens-holder unit 42 is displaced only when there is a positive command sent through the motor 60; moreover, the absence of electrical supply to the motor does not modify the pre-existing position of the lens 46.

The present invention enables adjustment of the position of the focal point of the laser beam by means of a very simple structure and with very small moving parts. The system according to the present invention moreover enables disassembly of the lens-holder unit 42 (for example, in order to replace it with a lens-holder unit of a different type) in an extremely simple way. To disassemble the lens-holder unit 42 it is just sufficient to remove the screws that fix the nozzle 30 to the body 18, remove the nozzle 30, and then activate the electrical motor 60 in the direction that produces a displacement downwards of the lens-holder unit. In this way, the lens-holder unit 42 is spontaneously ejected from the body 18 without any need to use tools. Re-assembly of the lens-holder unit is likewise simple, given that it is sufficient to position the new lens-holder unit 42 inside the body 18 and activate the motor 60 in the direction that controls a displacement upwards of the lens-holder unit. Next, the nozzle 30 is mounted and is fixed to the body 18 by tightening the screws provided.

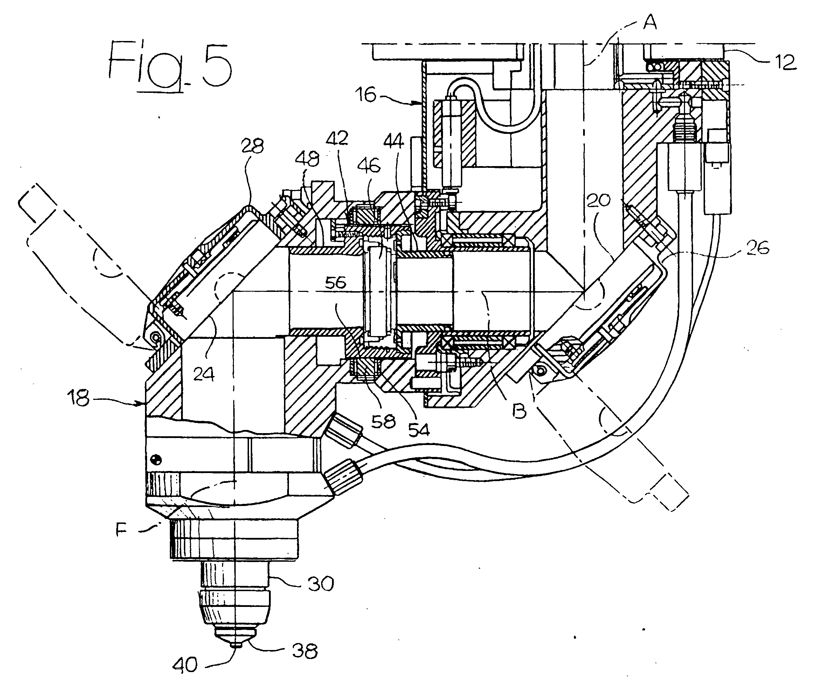

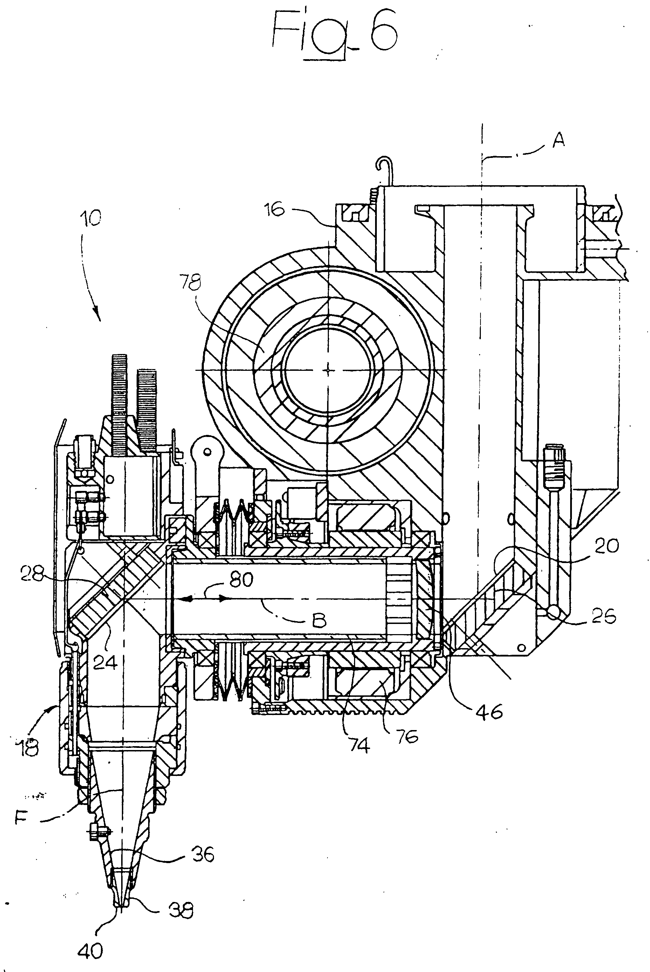

Figures 5 and 6 illustrate, respectively, a second embodiment and a third embodiment of a head according to the invention. Items corresponding to those previously described are designated by the same reference numbers.

In the embodiment of Figure 5, the lens-holder unit 42 is substantially identical to the one described with reference to Figures 2-4. The only difference is that, in this case, the lens-holder unit 42 is set between the first mirror 20 and the second mirror 24 and is mobile with respect to the body 18 in the direction of the axis B.

In the embodiment illustrated in Figure 6, the base 16 carries a sleeve 74 which can turn about the axis B and is controlled by a direct motor 76. The body 18 carrying the second mirror 24 is mobile with respect to the sleeve 74 in a rectilinear direction coinciding with the axis B. For the movements of rotation about the axis B, the body 18 is integral with the sleeve 74. A second direct motor 78 controls movement of the body 18 in the direction indicated by the double-headed arrow 80. The structure of the head illustrated in Figure 6 is described in detail in the Italian patent application No. TO2000A000252 filed by the present applicant. In the embodiment illustrated in Figure 6, the focusing lens 46 is fixed with respect to the sleeve 74. Movement of the second mirror 24 in the direction indicated by the arrow 80 makes it possible to vary the position of the focusing area of the laser beam with respect to the beam-exit nozzle in a way similar to what is obtained by moving the lens with respect to the mirror.

## Claims

1. A focusing head for a laser machine, comprising:
- a base (16) carrying a first mirror (20) designed to receive a laser beam along a first axis (A);
- a body (18) carrying an exit nozzle (38) and a second mirror (24) designed to receive the laser beam deflected by the first mirror (20) along a second axis (B) and to deflect said beam along a third axis (F) towards said exit nozzle (38); and
- a focusing lens (46);
**characterized in that** said body (18) is rotatably mounted with respect to the base (16) about said second axis (B) and that a motor operated device (42,58,60,62) is provided for varying the relative position between said lens (46) and said exit nozzle (38).

2. The focusing head according to Claim 1, comprising a lens-holder unit (42) including at least one support (44, 48) which is mobile with respect to the body (18).

3. The focusing head according to Claim 2, **characterized in that** the aforesaid support (44, 48) of the lens-holder unit (42) is mobile with respect to the body (18) along the aforesaid third axis (F).

4. The focusing head according to Claim 2, **characterized in that** the aforesaid support (44, 48) of the lens-holder unit (42) is mobile with respect to the body (18) along the aforesaid second axis (B).

5. The focusing head according to Claim 2, in which the aforesaid lens-holder unit (42) comprises an external thread (54) which engages an internal thread (56) of a nut screw (58) carried by the body (18) in such a way that it can turn about the aforesaid third axis (F).

6. The focusing head according to Claim 5, in which the aforesaid nut screw (58) has an external toothing (64) which engages a pinion gear (62) connected to an output shaft of an electric motor (60).

7. The focusing head according to Claim 2, comprising seal means (66) for establishing gas-tight connection between nozzle (30) and a tubular portion (68) of the lens-holder unit (42).

8. The focusing head according to Claim 1, **characterized in that** the focusing lens (46) is set between the first mirror (20) and the second mirror (24), and **in that** means (78) are provided for controlling movement of the body (18) along the aforesaid second axis (B).

## Patentansprüche

1. Fokussierender Kopf für eine Lasermaschine, umfassend:
- ein Basisteil (16), das einen ersten Spiegel (20) trägt, der zum Empfang eines Laserstrahls entlang einer ersten Achse (A) ausgelegt ist;
- einen Körper (18), der eine Austrittsdüse (38) und einen zweiten Spiegel (24) trägt, der zum Empfang des von dem ersten Spiegel (20) abgelenkten Laserstrahls entlang einer zweiten Achse (B) und zur Ablenkung des Strahls entlang einer dritten Achse (F) zu der Austrittsdüse (38) hin ausgelegt ist; und
- eine Fokussierlinse (46);
**dadurch gekennzeichnet, dass**
der Körper (18) bezüglich des Basisteils (16) um die zweite Achse (B) drehbar befestigt ist und dass eine Vorrichtung (42, 58, 60, 62) mit Motorantrieb zum Verändern der Relativposition zwischen der Linse (46) und der Austrittsdüse (38) vorgesehen ist.

2. Fokussierender Kopf gemäß Anspruch 1, umfassend eine Linsenträgereinheit (42) mit wenigstens einer Halterung (44, 48), die bezüglich des Körpers (18) beweglich ist.

3. Fokussierender Kopf gemäß Anspruch 2, **dadurch gekennzeichnet, dass** die Halterung (44, 48) der Linsenträgereinheit (42) bezüglich des Körpers (18) entlang der dritten Achse (F) beweglich ist.

4. Fokussierender Kopf gemäß Anspruch 2, **dadurch gekennzeichnet, dass** die Halterung (44, 48) der Linsenträgereinheit (42) bezüglich des Körpers (18) entlang der zweiten Achse (B) beweglich ist.

5. Fokussierender Kopf gemäß Anspruch 2, wobei die Linsenträgereinheit (42) ein Außengewinde (54) umfasst, das derart in ein Innengewinde (56) einer von dem Körper (18) getragenen Spindelmutter (58) eingreift, dass sie um die dritte Achse (F) drehen kann.

6. Fokussierender Kopf gemäß Anspruch 5, wobei die Spindelmutter (58) eine Außenverzahnung (64) aufweist, die in ein Getrieberad (62) eingreift, das mit einer Kraftabgabewelle eines Elektromotors (60) verbunden ist.

7. Fokussierender Kopf gemäß Anspruch 2, umfassend Dichtungsmittel (66) zur Errichtung einer gasdichten Verbindung zwischen der Düse (30) und einem rohrförmigen Abschnitt (68) der Linsenträgereinheit (42).

8. Fokussierender Kopf gemäß Anspruch 1, **dadurch gekennzeichnet, dass** die Fokussierlinse (46) zwischen dem ersten Spiegel (20) und dem zweiten Spiegel (24) angeordnet ist und dass Mittel (78) zur Steuerung der Bewegung des Körpers (18) entlang der zweiten Achse (B) vorgesehen sind.

## Revendications

1. Tête de focalisation pour une machine laser comprenant :
- une base (16) portant un premier miroir (20) conçu pour recevoir un faisceau laser le long d'un premier axe (A);
- un corps (18) portant une buse de sortie (38) et un second miroir (24) conçu pour recevoir le faisceau laser désigné par le premier miroir (20) le long d'un second axe (B) et pour dévier ledit faisceau le long d'un troisième axe (F) en direction de ladite buse de sortie (38); et
- une lentille de focalisation (46);
**caractérisée en ce que** ledit corps (18) est monté de manière à pouvoir tourner par rapport à la base (16) autour dudit second axe (B) et qu'un dispositif (42,58,60, 62) actionné par un moteur est prévu pour modifier la position relative entre ladite lentille (46) et ladite buse de sortie (38).

2. Tête de focalisation selon la revendication 1, comprenant une unité porte-lentille (42) incluant au moins un support (44,48), qui est mobile par rapport au corps (18).

3. Tête de focalisation selon la revendication 2, **caractérisée en ce que** le support (44,48) mentionné précédemment de l'unité porte-lentille (42) est mobile par rapport au corps (18) le long du trajet (F) mentionné précédemment.

4. Tête de focalisation selon la revendication 2, **caractérisée en ce que** le support (44,48) mentionné précédemment de l'unité porte-lentille (42) est mobile par rapport au corps (18) le long du second axe (B) mentionné précédemment.

5. Tête de focalisation selon la revendication 2, dans laquelle l'unité porte-lentille (42) mentionnée précédemment comprend un filetage externe (54) qui engrène avec un filetage interne (56) d'une vis-écrou (58) portée par le corps (18) de telle sorte qu'elle peut tourner à la hauteur du troisième axe (F) mentionné précédemment.

6. Tête de focalisation selon la revendication 5, dans laquelle la vis-écrou (58) mentionnée précédemment possède une denture extérieure (64) qui engrène avec un pignon (62) raccordé à un arbre de sortie d'un moteur électrique (60).

7. Tête de focalisation selon la revendication 2, comprenant des moyens d'étanchéité (66) pour établir une liaison étanche aux gaz entre une buse (30) et une partie tubulaire (68) de l'unité porte-lentille (42).

8. Tête de focalisation selon la revendication 1, **caractérisée en ce que** la lentille de focalisation (46) est disposée entre le premier miroir (20) et le second miroir (24) et **en ce que** des moyens (78) sont prévus pour commander le déplacement du corps (18) le long du second axe (B) mentionné précédemment.
